# EUROPEAN PATENT SPECIFICATION

(11) **EP 1 365 406 B1**
(45) Date of publication and mention of the grant of the patent: **24.03.2010**
(21) Application number: 03077453.3
(22) Date of filing: 20.04.1999
(51) Int. Cl.: G11B 20/18

(54) **Recording medium, method for recording real time data and reproducing method**
Aufzeichnungsmedium, Verfahren zur Echtzeitdatenaufzeichnung und Wiedergabeverfahren
Support d'enregistrement, méthode pour enregistrer des données temps réel et procédé de reproduction

(30) Priority: 20.04.1998 KR 9814059; 24.06.1998 KR 9823913; 23.07.1998 KR 9829733; 27.08.1998 KR 9834880; 01.09.1998 KR 9835847
(43) Date of publication of application: 26.11.2003
(62) Divisional of application: 99303057.6
(73) Proprietor: SAMSUNG ELECTRONICS CO., LTD., Suwon-City, Kyungki-do (KR)
(72) Inventor: Ko, Jung-wan, Yongin-city Kyungki-do (KR)
(74) Representative: Robinson, Ian Michael

(56) References cited:
- EP-A- 0 383 298
- EP-A- 0 798 716
- WO-A-98/14938
- US-A- 5 528 571
- ECMA : STANDARDIZING INFORMATION AND COMMUNICATION SYSTEMS: "Standard ECMA-272 : 120 mm DVD Rewritable Disk (DVD-RAM)" February 1998 (1998-02) XP002114221 * page 43-51 *

## Description

The present invention relates to the field of managing a disk and its defects, and more particularly, to a recording medium for storing defect management information with respect to whether linear replacement is used, a method of effectively managing defects to record and/or reproduce video and/or audio data from a digital versatile disc random access memory (DVD-RAM) in real time, and a method of recording data in real time using defect management information.

Real time recording or reproduction means that a given amount of data is necessarily recorded or reproduced within a given time since input information is lost if it is not processed at the moment data is input, and since a phenomenon such as pause of an image or temporary interruption of music occurs with reproduction of data as abnormal information if data is not recorded or reproduced at a predetermined speed. The above-described problems are caused since the input of information cannot be temporally controlled by a recording and reproducing apparatus.

In the DVD-RAM standard version 1.0, a method of managing defects generated on a disk has been disclosed to increase the reliability of data recorded on the disk. Slipping replacement and linear replacement are included as the disclosed defect management method: the first method processes defects detected in an initializing process; and the second method replaces an error correction code (ECC) block unit (16-sector unit) including a sector having a defect generated during use of the disc with a defect-free ECC block in a spare area.

The slipping replacement is used to minimize a reduction in the recording or reproduction speed due to defects, in which a logical sector number to be provided to a defective sector is provided to a sector next to the defective sector detected during a certification process for investigating defects of a disc when the disc is initialized, that is, data is recorded or reproduced by slipping a sector on which a defect is generated during recording or reproduction. Here, a real physical sector number is pushed back by the sector number designated by slipping the defective sector. Such a left-behind phenomenon is solved by using as many sectors as there are defects in a spare area located at the end portion of a corresponding recording area.

However, the slipping replacement cannot be used for a defect generated while a disc is used. When a defective portion is disregarded and skipped, discontinuity is generated on logical sector numbering, which means that the slipping replacement violates file system rules. Thus, the linear replacement is used when a defect is generated during use of the disc, which means the replacement of an ECC block including a defective sector with an ECC block existing in a spare area.

When the linear replacement is used, no vacuum exists in a logical sector number, however, the position of a sector on a disc is discontinuous, and real data corresponding to a defective ECC block exists in the spare area.

As described above, when real time recording, in which the time for temporarily-input information cannot be arbitrarily delayed, such as, recording of broadcast information or a real image, is necessary, information is recorded in an area to be linearly-replaced by undergoing a process in which a real pickup goes up to the spare area and searches for an area to be linearly replaced, and a process in which the real pickup comes back. Hence, the recording speed is reduced, so that information input in real time cannot be continuously recorded when the linear replacement is used.

It is prescribed that a DVD-RAM drive according to the DVD-RAM standard version 1.0 processes all of this defect management to reduce the burden of the host computer used in the drive. The host computer is designed to transmit a command ordered not to manage defects to the drive using a command denoted in an interface standard. That is, if the host computer determines whether defect management will be performed, the defect management itself is supposed to be performed by the drive.

Even when the host computer does not manage defects according to the need of an application program, the DVD-RAM disc according to the DVD-RAM standard version 1.0 must necessarily manage defects recorded in a primary defect list (PDL) and a secondary defect list (SDL) according to a defect management rule if an area slipping replaced or linear replaced due to defect management performed by another drive exists. Here, it is prescribed that the position of a defective sector replaced according to slipping replacement should be recorded in the PDL, and the position of a defective block replaced according to linear replacement should be recorded in the SDL. That is, when data is recorded after setting the fact that a specific drive should not perform defect management using the linear replacement, it cannot be ensured that other drives must also not perform the linear replacement on the same disc.

Therefore, when real time recording is performed by a current DVD-RAM disc, it may be difficult because of an area to be used by the linear replacement.

US 5,528,571 describes a disc driving apparatus using SSA (Sector Slipping Algorithm) for defective sectors and LRA (Linear Replacement Algorithm). The disc driving apparatus can reproduce data at high speed on the basis of attribute data representing whether a defective sector is processed by the SSA or the LRA. This document forms the pre-characterising portion of the claims dependent hereto.

With a view to solve or reduce the above problems, it is an aim of embodiments of the present invention to provide a recording medium for storing defect management information associated with whether linear replacement is used or not, to record real time data.

It is another aim to provide a recording medium for storing information for showing a plurality of different defect management modes according to the type of data to be recorded.

It is still another aim to provide a recording medium for allocating a spare area for only real time recording whose space can be effectively utilized.

It is still yet another aim to provide a method of recording real time data using the defect management information associated with whether the linear replacement is used.

According to a first aspect of the invention, there is provided a recording medium comprising a user data area, spare area and a control information area, wherein the control information area comprises information for linear replacement defect management in which a defective area on the recording medium is replaced with the spare area, characterised by defect management information indicative of whether replacement or non-replacement of the defective area by linear replacement with the information for a linear replacement defect management stored in the control information area is required, wherein the defect management information indicating non-replacement indicates non-replacement of the defective area even if the defective area was previously designated for replacement by linear replacement.

For a better understanding of the invention, and to show how embodiments of the same may be carried into effect, reference will now be made, by way of example, to the accompanying diagrammatic drawings, in which:
Figure 1 is a view for explaining a defect management method using slipping replacement of a recording medium;
Figure 2 is a view for explaining a defect management method using linear replacement of a recording medium;
Figure 3 is a table of a defect definition structure (DDS) ;
Figures 4A and 4B illustrate the structures of the disc certification flag and the group certification flag shown in Figure 3, respectively;
Figure 5 is a table of the contents of a secondary defect list (SDL);
Figure 6 illustrates the structure of the spare area full flag shown in Figure 5;
Figure 7 illustrates the structure of the SDL entry shown in Figure 5;
Figures 8A and 8B illustrate the structures of the disc certification flag and the group certification flag of the DDS for recording real time data proposed by embodiments of the present invention, respectively;
Figure 9 is a flowchart illustrating an embodiment of a method of recording data according to a defect management method of the present invention;
Figure 10 illustrates an example of the structure of an improved SDL entry for cancelling linear replacement as proposed by the present invention;
Figure 11 illustrates an example of a DDS for storing information for indicating a plurality of different defect management modes proposed by the present invention;
Figure 12 is a table showing allocated spare areas for recording real time data as proposed by embodiments of the present invention; and
Figure 13 illustrates a DDS and the structure of a primary defect list (PDL) for storing defect management mode information as proposed by embodiments of the present invention for allocating the spare areas for only real time recording shown in Figure 12.

Preferred embodiments of a recording medium storing defect management information for recording real time data, a defect managing method using the same, and a real time data recording method will now be described with reference to the attached drawings.

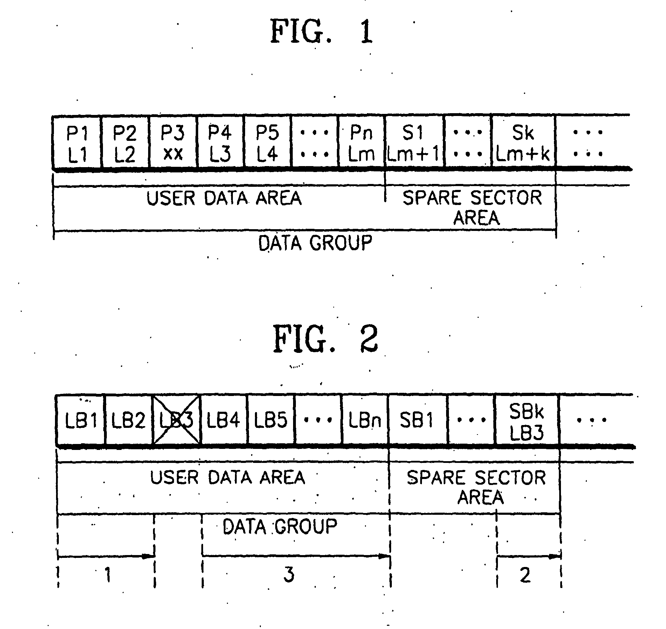

First, slipping replacement and linear replacement will be described in detail referring to Figures 1 and 2 in order to help in the understanding of the present invention.

Figure 1 is a view for explaining a defect management method using the slipping replacement. Physical addresses on a disc shown in Figure 1 are recorded as P1, P2, P3, ..., Pn, and logical addresses must be provided to record real data in this physically-segmented sector. These logical addresses act as addresses allowing a real file system to search for its own data. However, the relationship between the physical addresses and the logical addresses is made in a disc initialization process. If a defect is detected on the third physical sector P3 as shown in Figure 1, a logical address is not designated to this defective sector, and a logical sector number L3 is designated to the next physical sector P4. Then, the logical sectors are sequentially pushed back by the number of defective sectors, and a spare area located at the end of a corresponding data group is used by the pushed portion. In this slipping replacement method, effective processing in sector units is possible by simply slipping a defective region, and a pickup does not need to move to a different place upon recording and reproduction by simply disregarding and skipping a defective portion. Thus, the defective region can be avoided while minimizing the delay time. Here, the position of a defective sector replaced by the slipping replacement is recorded in the PDL.

Figure 2 is a view for explaining a defect management method using linear replacement. In the linear replacement for processing defects generated while a disc is used after being initialized, the defects are managed in an ECC block unit, i.e., in units of 16 sectors. In other words, when an error is generated at a specific sector and a defect is thus detected, if the movement in units of at least 16 sectors is not made for error correction, the error correction unit of each data previously recorded in a disc must be changed. Thus, processing in an ECC block unit must be performed, and the slipping replacement method of slipping a defective sector and designating a logical sector cannot be used since the logical address of an area where data has already been recorded cannot be changed. When a defect is generated in a logical block LB3 as shown in Figure 2, the defective region is recorded in the SDL to be prevented from being used, and the defective portion is replaced with a usable block existing in a spare area. The replaced block (SBk in Figure 2) in the spare area has the same logical block number (LB3) as the erroneous block.

In a reproduction sequence, as shown in Figure 2, reading is continued just before to a defective block as in an area 1, a replaced ECC block existing in the spare area is read by moving a pickup or the like as in an area 2, and data is continuously read from a block right next to the defective block as in an area 3. In order to process defects as described above, pickup movement is caused such as a process for searching for data and a process for returning to the block right next to the defective block after reading the replaced block. Thus, much time is required to read or write data, so that this defect management is not appropriate for real time recording.

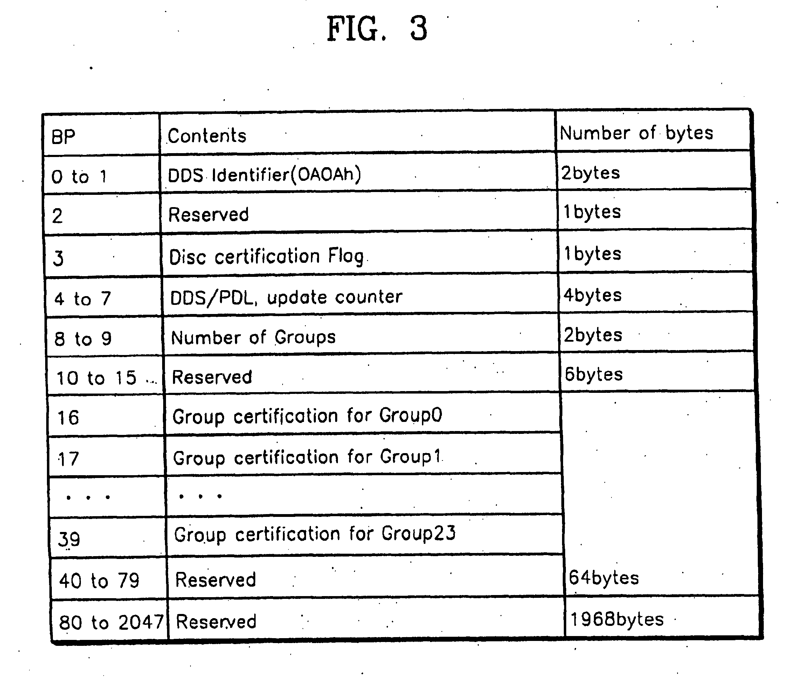

Figure 3 is a table of a disc definition structure (DDS) existing in a defect management area (DMA) of a DVD-RAM. In particular, a byte position (BP) 3, a disc certification flag, records the certified contents of the entire disc, and BPs 16 through 39, group certification flags, record the contents of certification of 24 data groups.

In addition, BPs 0 and 1 are DDS identifiers, and BPs 4 through 7 are the values of counters for updating DDS/PDL representing the total number of times in which a DDS/PDL block is updated and rewritten. That is, when initialization starts, the value of a counter is set to be "0", and increases by one whenever the DDS/PDL is updated or rewritten. All DDS/PDL and SDL blocks must have the same counter value after formatting is completed. BPs 8 and 9 denote the number of groups, and, for example, 24 groups are recorded as "0018" (hexadecimal).

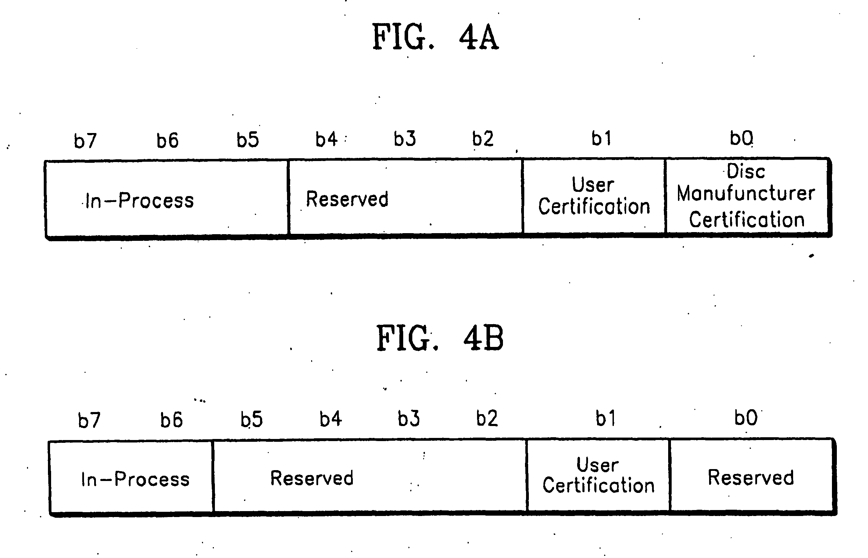

Figure 4A illustrates the structures of the disc certification flag shown in Figure 3. When a bit b7 among three bits b7, b6 and b5 representing an in-process state is "0b", it indicates format completion, and when the bit b7 is "1b", it indicates an under-formation state. When the bit b6 is "0b", it indicates the progress of formatting using full certification, and when the bit b6 is "1b", it indicates the progress of formatting using partial certification. When the bit b5 is "0b", it indicates the progress of formatting on the entire disc, and when the bit b5 is "1b", it indicates the progress of formatting on only groups, and indicates that the group certification flag is effective. When a bit b1 representing user certification is "0b", it indicates that a disc has never been certified by a user, and when the bit b1 is "1b", it indicates that a disc has been certified one or more times by a user. When a bit b0 representing disc manufacturer certification is "0b" it indicates that a disc has never been certified by a manufacturer, and when the bit 0 is "1b", it indicates that the disc has been certified one or more times by the manufacturer. Other bits b4, b3, and b2 are reserved. However, "in-process" is set to be "1xx by any certification before formatting, and when formatting is completed, the "in-process" is reset to be "000".

Figure 4B illustrates the structure of each of the group certification flags of the bit positions 16 through 39 shown in Figure 3. When a bit b7 among two bits b7 and b6 representing an in-process state is "0b", it indicates format completion of a corresponding group, and when the bit b7 is "1b", it indicates that the corresponding group is being formatted. When the bit b6 is "0b" it indicates that the group is being formatted using full certification, and when the bit b6 is "1b", it indicates that the group is being formatted using partial certification. When a bit b1 representing user certification is "0b", it indicates that the group has never been certified by a user, and when the bit b1 is "1b", it indicates that the group has been certified one or more times by a user. Other bits b5, b4, b3, b2, and b0 are reserved.

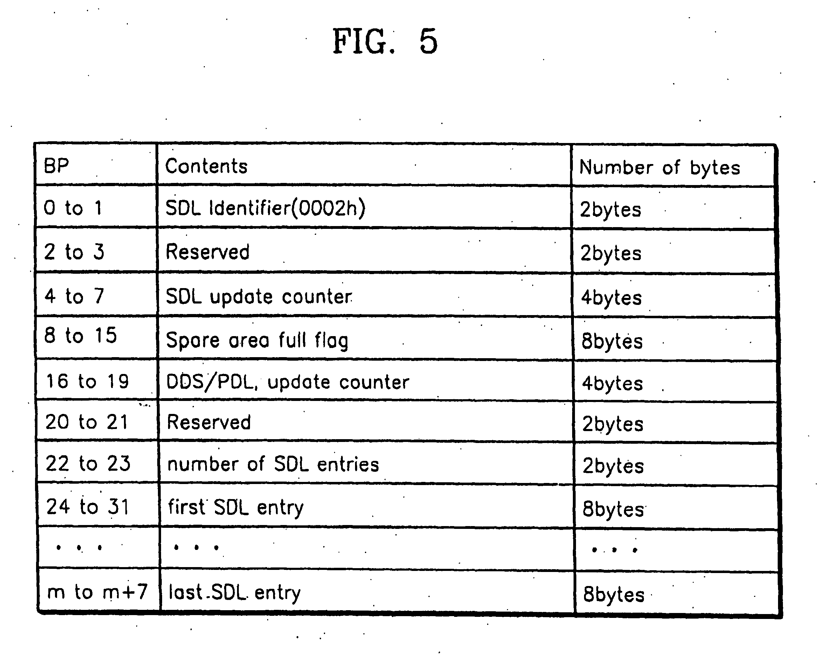

Figure 5 is a table showing the contents of a secondary defect list (SDL). RBP is the position of a relative byte starting with 0. Relative byte positions 0 and 1 are SDL identifiers, and relative byte positions 2 and 3 are reserved. Relative byte positions 4 through 7 denote the total number of updated SDL blocks, and SDL updating counter values increases by one whenever the content of SDL is updated. Relative byte positions 8 through 15 denote spare area full flags, and relative byte positions 16 through 19 denote DDS/PDL updating counter values each indicating the total number of times the DDS/PDL block is updated and rewritten. The counter value is set to be "0" when initialization starts, and increases by 1 whenever the DDS/PLD is updated or rewritten. As mentioned above, all the DDS/PDL and SDL blocks must have the same count value after formatting is finished. Relative byte positions 20 and 21 are reserved, and relative byte positions 22 and 23 indicate the number of entries in the SDL. The remaining relative byte positions indicate each SDL entry.

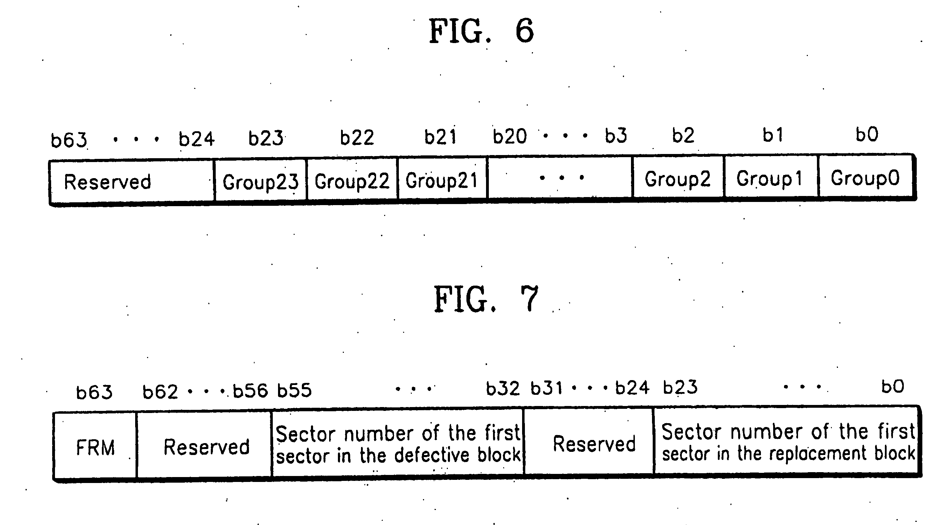

Figure 6 illustrates the structure of the spare area full flag of the relative byte positions 8 through 15 shown in Figure 5. In Figure 6, if a bit representing a corresponding group is "1", it indicates that no spare blocks are left in the corresponding group, and if the bit is "0", it indicates that a spare block remains in the corresponding group.

Figure 7 illustrates the structure of the SDL entry shown in Figure 5. In Figure 7, FRM is a bit representing whether a defective block has been replaced. When the defective block has been replaced, FRM records a binary "0", and when the defective block has not been replaced or no spare areas exist, FRM records a binary "1". The SDL entry includes the sector number of the first sector of a defective block, and the sector number of the first sector of a replacement block. Here, if the defective block has not been replaced, a hexadecimal "000000" is recorded in an area where the first sector number of the replacement block is recorded.

Meanwhile, in real time recording, whether corresponding data can be processed within a given time becomes more important than some errors of real data. In particular, in the case of an image or the like, an error is generated to part of a screen when a small error exists in the image. On the other hand, when input data cannot be processed in time, continuous data error is generated to make normal reproduction impossible. Therefore, the processing of data in time is more important.

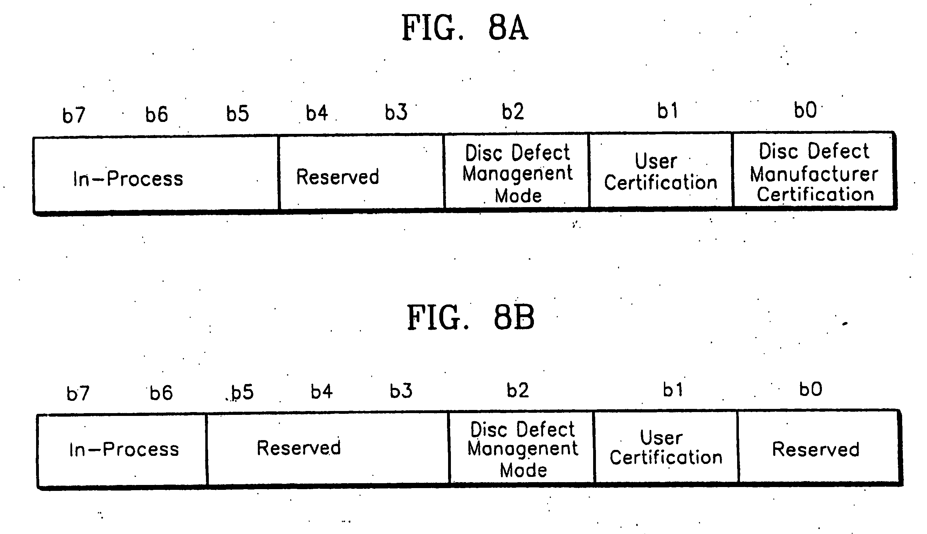

Thus, as for the real time recording, a method allowing non-use of the linear replacement must be suggested. When the linear replacement is not used, there must be a portion recording the fact that a corresponding disc is in use without using the linear replacement. A method of recording such a content will be described referring to Figures 8A and 8B.

Figures 8A and 8B illustrate the structures of the disc certification flag and the group certification flag of the DDS proposed by the present invention to record real time data, respectively. The structures of the disc certification flag and the group certification flag of Figures 8A and 8B are the same as those of Figures 4A and 4B except for a bit position b2. That is, as shown in Figure 8A, when the entire corresponding disc is used without the linear replacement, the bit position b2 of the disc certification flag is set as "1", and when the corresponding disc is used by the linear replacement as in the prior art, the bit position b2 is set as "0". In Figures 8A and 8B, information associated with use or non-use of the linear replacement stored in the bit position 2(b2) is called a disc defect management mode.

Also, when only specific groups are partially initialized to prevent the linear replacement, as shown in Figure 8B, the bit position 2(b2) of the group certification flag for a corresponding group is set as "1" to indicate that linear replacement is not performed on a data region in the corresponding group. In an embodiment of the present invention, the bit positions 2(b2) of the disc certification flag and the group certification flag are used as shown in Figures 8A and 8B, but another reserved bit can be used. Here, each existing b2 region is reserved, and its value is recorded as "0".

When the bit b2 for a disc defect management mode of the disc certification flag or group certification flag is set as "1" upon initialization of a disc, the SDL records only the start sector address of a block having a defect generated during use of the disc, records an FRM bit of the SDL entry as "1", and the linear replacement is not performed. A hexadecimal "000000" is recorded in an area for recording the first sector number of a replacement block of the SDL entry.

In this way, while compatibility between a defect managing method based on a current DVD-RAM standard and a method of the present invention is maintained, i.e., while a method capable of indicating the existence of non-linearly-replaced blocks as in an existing defect managing method is suggested, a method allowing a defective block not to be linearly replaced is also provided to thereby accomplish recording and reproduction of real time data.

A determination of whether a defective region will be replaced by a block existing in a spare area using linear replacement is made by information associated with use or non-use of linear replacement defect management recorded in a defect management region on the entire disc or a specific area of the disc regardless of the type of data to be recorded in a corresponding area.

Also, a determination of whether a defective region will be replaced by a block existing in a spare area using the linear replacement is made by information associated with use or non-use of linear replacement defect management recorded in a defect management region on the entire disc or in a specific area on the disc in the case of only data required to be recorded in real time.

A method of preventing linear replacement with respect to the entire disc or a specific group of discs was described on the basis of the above-described embodiment. In another embodiment, when a disc defect management mode is set as "1", it can be used as information that the linear replacement is not performed with respect to a block having a defect in an area of a disc for recording information requiring real time recording and reproduction, but the linear replacement can be performed with respect to an area of a disc not requiring real time recording. In this case, when data not requiring real time recording has already been recorded in an area in which real time data must be recorded, and a defective region is thus linearly replaced, the linear replacement of the defective region must be capable of being canceled. Therefore, when the disc defect management mode is set as "1", this can mean that the linear replacement of the defect can be canceled when real time information is recorded.

In order to prevent entire linear replacement with respect to the entire disc or a given group on the disc, information associated with the disc defect management mode is set as "1" upon initialization. On the other hand, when linear replacement is not performed only in the case of recording real time data, there is no need to set the defect management mode information upon initialization. That is, when it is determined that there is a necessity for recording real time data in a disc, the disc defect management mode is set as "1" just before the real time data is recorded. At this time, a determination of whether a corresponding disc is suitable for recording real time data is made on the basis of the amount or distribution of a defect generated on the disc. When it is determined that the disc is suitable, the disc defect management mode is set as "1". Otherwise, a process for informing a user that the disc is not suitable for recording real time data is required.

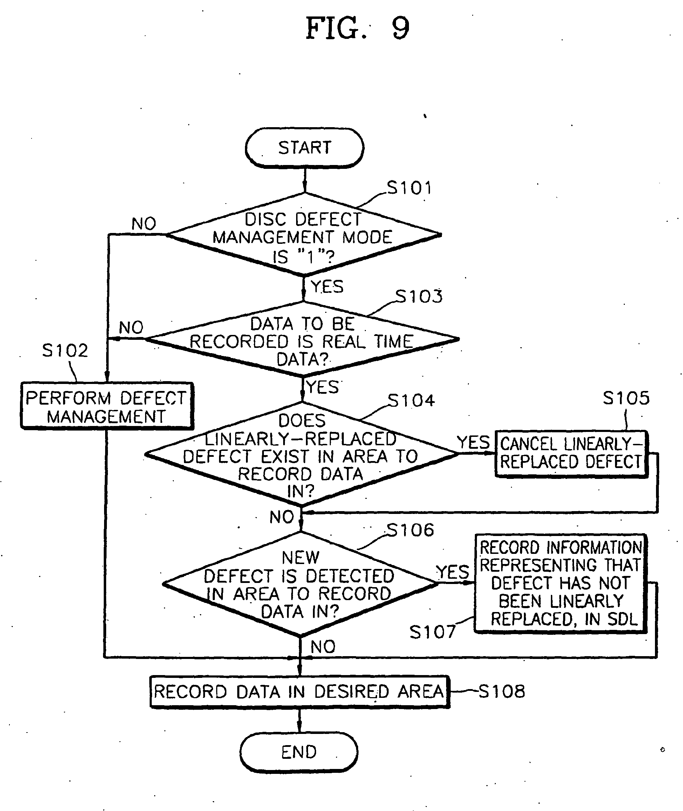

Figure 9 is a flowchart illustrating a method of recording data in real time without performing defect management using linear replacement with respect to only data desired to be recorded when the disc defect management mode is "1".

In Figure 9, first, a determination of whether a disc defect management mode is "1" is set before recording of data on a disc begins, in step S101. If the disc defect management mode is "1", it is determined whether data to be recorded is real time data, in step S103. If the defect management mode is "0", every data is recorded on the basis of a general defect managing method defined in the standard book version 1.0, in steps S102 and S108. When it is determined in step S103 that data to be recorded is not real time data, step S102 of performing general defect management is performed. When it is determined in step S103 that data to be recorded is real time data, it is determined whether an already-linearly-replaced defect exists in an area where data is to be recorded, in step S104.

When it is determined in step S104 that the linearly-replaced defect exists in the area to record data in, the linearly-replaced defect is canceled, in step S105. When no linearly-replaced defect exists in the area to record data in, it is determined whether a newly-detected defect exists in the area to record data in, in step S106.

When it is determined in step S106 that a new defect is detected, information representing that a defect has not been linearly replaced is recorded in a secondary defect list (SDL) of a defect management area, in step S107. Next, data is recorded in a desired area in step S108. Also, when a new defect is not detected in step S106, step S108 of recording real time data in a desired region is performed.

Step S105 of canceling a linearly-replaced defect, and step S107 of recording information representing that a defect has not been linearly replaced are performed by recording the first sector number of a replacement block as a hexadecimal "000000", among linearly-replaced defect information recorded in the SDL, and by recording the FRM information as "1". In this. case, since the disc defect management mode is set as "1", it can be recognized from the comparison of this mode information with FRM information that the meaning of the FRM information becomes different from that of existing FRM information.

That is, the FRM information based on the existing standard book denotes that a block having a defect generated for a certain reason has not been replaced with a block in a spare area or no spare areas can be replaced. On the other hand, FRM information based on a new definition is added to the meaning of the existing FRM and can be information representing that when the disc defect management mode is "1", the linear replacement of a defective block replaced by an existing linear replacement method has been canceled for real time recording, or the defective block has not been linearly replaced for real time recording.

Since a disc whose defect management mode is set as "1" is likely to include real time information, the disc can be utilized as information of prohibiting reallocation of information on a disc without consideration of real time information. Piece collection of collecting the pieces of a file on a disc, and read after reallocation can be included as a method of reallocating the information on a disc. The read after allocation is a method of reading data and then replacing a data block likely to have a defect with a block located in a spare area.

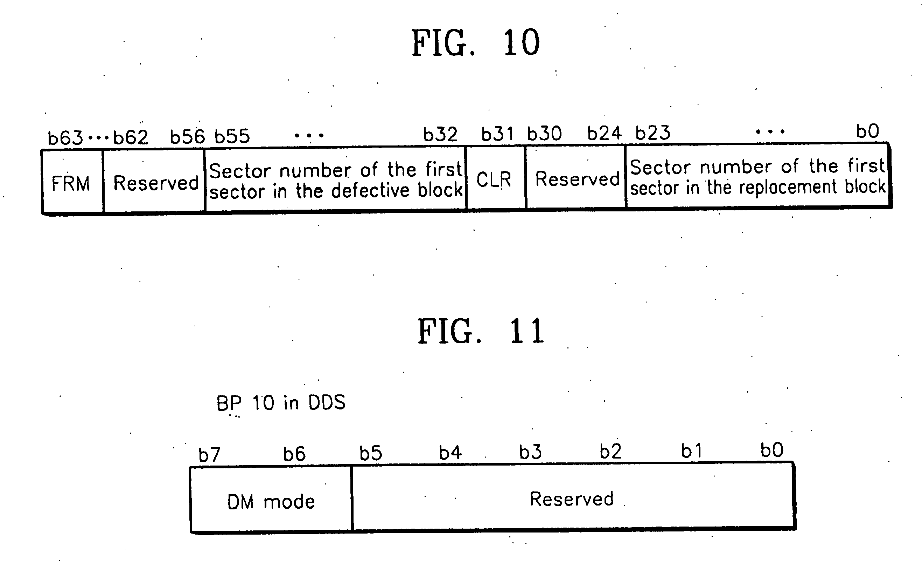

Figure 10 illustrates the structure of an improved SDL entry for canceling linear replacement proposed by the present invention. When an already-replaced defect exists on a corresponding disc upon recording of real time data, a method of recording the information of an area, in which the first sector number of the replacement block as described above is recorded, as a hexadecimal "000000" and setting an FRM bit as "1" is exemplified as a process for canceling the linear replacement.

This method can minimize the change in the existing standard. However, in this method, the information of a block which is determined as defective and replaced must be deleted, so that linear replacement may be arbitrarily performed, canceled, and again performed without sequentially using a spare area. In particular, when a linearly-replaced block in the spare area is defective and again replaced, information associated with the linearly-replaced defective block in the spare area is lost.

Thus, it would be preferable that blocks in a corresponding spare area are sequentially used when linear replacement occurs, and that even when the linear replacement is canceled, information associated with a block in the spare area replacing a corresponding defect block is maintained. When only a region recording an FRM bit and the first sector number of a replacement block is used to maintain information associated with the replaced sector number of the spare area, it is not possible to tell if the corresponding replaced block has again been replaced on account of a defect or if the linear replacement has been canceled to record real time data.

In order to solve such a problem, a canceled linear replacement (CLR) flag is newly defined by using a spare bit of the SDL entry which is not in use. When linear replacement with respect to a corresponding SDL entry is canceled for recording real time data, a method of setting the CLR flag as "1" can be used. Here, when the CLR flag is set as "0", it indicates a replacement block allocated without being used by real time data. In the structure of an SDL entry of Figure 10, for example, a bit b31 not in use is used as the CLR flag.

Meanwhile, defect management information for recording real time data can be roughly divided into three cases in which: (1) real time data is not recorded on the entire disc; (2) two types of data, i.e., real time data and non-real time data, coexist on a disc, and a linear replacement defect managing method is not used with respect to only the real time data; and (3) only the real time data is recorded in the entire disc, i.e., the linear replacement defect managing method is not used with respect to all recorded data.

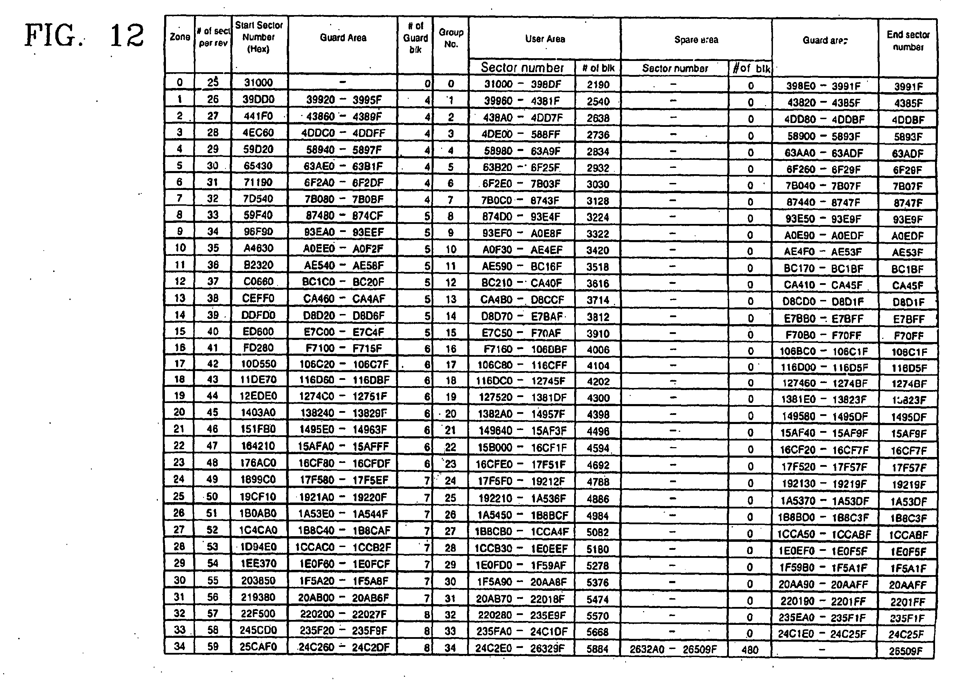

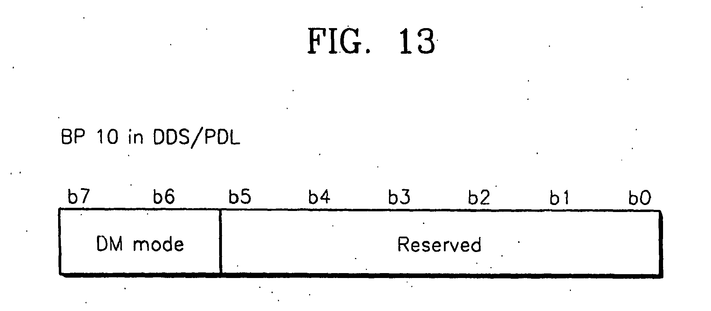

Particularly, in the third case, real time replacement is not used for the entire disc, so that a spare area for defect management can be set to a smaller size than in the first and second cases. This will be described in detail later referring to Figures 12 and 13.

When these three or more defect managing methods are applied to one disc, various correspondences are possible according to the purpose of use of a disc, and the disc can be more effectively used. However, considering a condition such as the case of changing and using discs between reproduction apparatuses, the defect management conditions in which a corresponding disc is used must be described in more detail. 1-bit disc defect management mode information representing use or non-use of linear replacement described in Figure 8 is deficient for defect management information in the above case.

Thus, as shown in Figure 11, defect management mode information capable of representing linear replacement or non-linear replacement depending on a plurality of different defect management modes is stored in a reserved byte located in the DDS of the defect management area (DMA) on a disc. That is, Figure 11 shows the case of using two significant bits b7 and b6 of the relative byte position BP10 of DDS, i.e., the eleventh byte thereof, by taking defect management (DM) mode depending on use or non-use of linear replacement as an example.

As shown in Figure 11, when the DM mode information is "00b", it indicates that the slipping replacement and the linear replacement are applied to all data on a disc, when the DM mode information is "01b", it indicates that the linear replacement is selectively applied according to the type of information (here, real time data and non-real time data), and when the DM mode information is "10b", it indicates that the linear replacement is not used with respect to every data.

That is, when the DM mode information is "00b", the slipping replacement and the linear replacement are mandatory, and this mode is only for data other than real time data in the first case described above. When the DM mode information is "01b", the linear replacement is mandatory, but the linear replacement for real time data is optional. This mode is defect management for a hybrid disc including both real time data and non-real time data in the second case described above. When the DM mode information is "10b", only the slipping replacement is allowable, and this mode is defect management for only real data in the third case described above. When the DM mode information is "10b", the physical layout of a disc can be changed.

Meanwhile, since linear replacement cannot be used to record real time data, a spare area necessary for linear replacement does not actually become necessary. For this case, in the present invention, only a spare area for slipping replacement is set in the last group without allocating a spare area for linear replacement as shown in Figure 12. In particular, the spare area set in the last group (here, a thirty fourth group) allocates 7680 sectors (480 ECC blocks) to a spare area for slipping replacement to process a maximum of 7679 entries capable of being registered in a primary defect list (PDL). In Figure 12, sect denotes a sector, blk denotes block, and rev denotes revolutions.

In order to obtain the compatibility between the present invention and an existing defect management structure, a flag, capable of discriminating a case in which spare areas for only slipping replacement are allocated only for real time recording from a case in which spare areas for linear replacement and slipping replacement are allocated according to an existing defect management method, is represented with significant bits b7 and b6 of the relative byte position BP 10 in the DDS and the PDL, as shown in Figure 13.

As shown in Figure 13, when two significant bits b7 and b6 representing a DM mode on the byte position BP 10 of the DDS/PDL are "00b", it indicates that an existing defect managing method is applied, and when the two significant bits b7 and b6 are "10b", a defect managing method for only real time recording without linear replacement, in which only the spare area for slipping replacement is allocated in the last group of a disc, is applied. Thus, spare areas are allocated by a method dedicated for real time recording, thereby increasing the efficiency due to the application of the space of a disc.

As described above, while compatibility between a method of the present invention and a defect managing method based on the current DVD-RAM standard is maintained, linear replacement is not performed when real time data is recorded. Thus, real time data can be recorded and reproduced.

In embodiments of the present invention, information representing a plurality of different defect management modes depending on the type of data to be recorded is stored, so that various correspondences are possible according to the purpose of use of the recording medium. Thus, the recording medium can be more effectively used.

Also, in embodiments of the present invention, when real time data is recorded, spare areas are allocated to be used for only real time. Thus, the effectiveness due to the application of the space of a disc can be increased.

## Claims

1. A recording medium comprising a user data area, spare area and a control information area, wherein the control information area comprises information for linear replacement defect management in which a defective area on the recording medium is replaced with the spare area, **characterised by** defect management information indicative of whether replacement or non-replacement of the defective area by linear replacement with the information for a linear replacement defect management stored in the control information area is required, wherein the defect management information indicating non-replacement indicates non-replacement of the defective area even if the defective area was previously designated for replacement by linear replacement.

2. The recording medium as claimed in claim 1, wherein the defect management information contains information associated with the entire recording medium.

3. The recording medium as claimed in claim 1, wherein the defect management information contains information associated with parts of the recording medium.

4. The recording medium as claimed in claim 1, 2 or 3, wherein the recording medium is a disc designated by a digital versatile disc (DVD) standard.

5. The recording medium as claimed in claim 1, 2 or 3, wherein the recording medium is a DVD-RAM disc designated by a DVD-RAM standard.

6. The recording medium as claimed in claim 1, 2, 3, 4 or 5, wherein the defect management information is recorded in a reserved area of a disc certification flag and a group certification flag in a disc definition structure (DDS) provided by the DVD-RAM.

7. The recording medium as claimed in any of claims 1 to 6, wherein the defect management information is stored upon initialization.

8. The recording medium as claimed in any of claims 1 to 6, wherein the defect management information is stored just before recording the real time data.

9. The recording medium as claimed in any of the preceding claims, wherein only the start sector number of a block having a defect generated while real time data is recorded on the recording medium is recorded in a secondary defect list (SDL), information representing that the defective block has not been replaced is recorded in an FRM bit of an SDL entry for representing replacement or non-replacement of the defective block, and information representing non-replacement is recorded in the start sector number of a replacement block of the SDL entry.

10. The recording medium as claimed in claim 9, wherein information representing that linear replacement has been cancelled is further stored in a reserved bit of the SDL entry, information representing that the defective block has been replaced is stored in the FRM bit of the SDL entry, and the start sector number of the defective block and that of the replacement block are stored in the SDL entry.

11. The recording medium as claimed in any of the preceding claims, wherein the defect management information includes information representing that linear replacement is applied with respect to every data on a recording medium, information representing that linear replacement is selectively applied according to the type of data, and information representing that linear replacement is not applied to every data on the recording medium, and this information is stored in the reserved area of the DDS.

12. The recording medium as claimed in any of the preceding claims, wherein when real time data is recorded, a spare area for linear replacement is not allocated, and only a spare area for slipping replacement is allocated.

13. The recording medium as claimed in claim 12, wherein the spare area for slipping replacement is allocated in the last group of the recording medium by the size of sectors capable of processing a maximum number of entries capable of registering a primary defect list (PDL).

14. The recording medium as claimed in claim 13, wherein the defect management information denoting use of a defect managing method for only real time recording in which linear replacement is not used by allocating only the spare area for slipping replacement, is stored in a reserved area of the DDS and the PDL.

15. The recording medium as claimed in any claims 1 to 10, comprising an information area for storing defect management mode information for showing a plurality of defect management modes representing replacement or non-replacement of the defective area by linear replacement according to the type of data to be recorded on a user data area of the recording medium.

16. The recording medium as claimed in claim 15, wherein the defect management mode information is stored in a reserved area of the DDS of a defect management area (DMA).

17. The recording medium as claimed in claim 15 or 16, wherein the defect management mode information includes first defect management mode information representing that slipping replacement and linear replacement are applied to every data on the recording medium, second defect management mode information representing that linear replacement is selectively applied according to the type of data, and third defect management mode information representing that linear replacement is not applied to every data on the recording medium.

18. The recording medium as claimed in any preceding claim, comprising defect management information representing non-replacement of the defective area by linear replacement to all data on the recording medium in a defect management area, in which only a spare area for slipping replacement is allocated.

19. The recording medium as claimed in claim 18, wherein the defect management area is a reserved area in the DDS and the PDL, and the spare area for slipping replacement can process a maximum number of entries capable of registering the PDL.

20. A method of recording real time data while managing a defect on a disc using a disc recording and/or reproducing apparatus, the method comprising the steps of:
(a) determining (S101) whether defect management mode information representing whether replacement or non-replacement of a defect by linear replacement is required;
(b) determining (S103) whether data to be recorded is real time data, when the defect management mode information is information representing that non-replacement by linear replacement is required;
(c) determining (S104) whether a linearly-replaced detect exists in an area to record data in, when the data to be recorded is real time data, and not replacing the defect by linear replacement when the defect management mode information is information representing that non-replacement by linear replacement is required even if the defective area was previously designated for replacement by linear replacement; and
(d) determining (S106) whether a new defect is detected in the area to record data in, when no linearly-replaced defect exists in the area to record data in, and recording the real time data in a desired area (S108) when the new defect is not detected.

21. The method of recording real time data as claimed in claim 20, further comprising the steps of:
(e) performing defect management (S102) when the defect management mode information is information representing that replacement by linear replacement is required, in step (a); and
(f) performing defect management (S102) when data to be recorded is not real time data in step (b).

22. The method of recording real time data as claimed in claim 20 or 21, further comprising the step of:
(g) cancelling replacement by linear replacement (S105) when a linearly-replaced defect exists in an area to record data in, in step (c).

23. The method as claimed in claim 22, wherein in step (g), only the start sector number of a defective block is left in the SDL, information representing that the defective block has not been replaced is stored in an FRM bit of the SDL entry showing whether the defective block has been replaced, and information representing that the defective block has not been replaced is recorded in the start sector number of a replacement block in the SDL entry.

24. The method as claimed in claim 22, wherein in step (g), a flag representing that replacement by linear replacement has been cancelled is set using a reserved bit of the SDL entry, information representing that a defective block has been replaced is stored in an FRM bit of the SDL entry, and the start sector number of the defective block and the start sector number of a replacement block are recorded in the SDL entry.

25. The method of recording real time data as claimed in any of claims 20 to 24, further comprising the step of:
(h) recording information (S107) representing that linear replacement has not been performed, when a new defect is detected in step (d).

26. The method as claimed in claim 25, wherein in step (h), only the start sector number of a defective block is left in the SDL, information representing that the defective block has not been replaced is stored in an FRM bit of the SDL entry showing whether the defective block has been replaced, and information representing that the defective block has not been replaced is recorded in the start sector number of a replacement block in the SDL entry.

27. The method as claimed in any of claims 20 to 26, wherein the defect management mode information is information representing replacement or non-replacement by linear replacement for the entire disc, and is stored in a reserved area of a disc certification flag in a DDS provided by DVD-RAM.

28. The method as claimed in any of claims 20 to 26, wherein the defect management mode information is information representing replacement or non-replacement by linear replacement for some data groups of the disc, and is stored in a reserved area of a group certification flag in a DDS provided by DVD-RAM.

29. The method as claimed in any of claims 20 to 26, wherein the defect management mode information includes information representing that slipping replacement and linear replacement are applied to all data on a disc, information representing that linear replacement is selectively applied according to the type of data, and information representing that linear replacement is not applied to all data on the disc, and this information is stored in a reserved area of a DDS provided by DVD-RAM.

30. The method as claimed in any of claims 20 to 29, wherein the defect management mode information is information representing the use of a defect managing method for only real time recording in which linear replacement is not used by allocating only the spare area for slipping replacement, and is stored in a reserved area of a DDS provided by DVD-RAM and the PDL.

31. A method of reproducing data from a recording medium comprising:
reading a defect list from the recording medium, the recording medium comprising a user data area, and a spare area; and
reproducing a user data stored in the user data area using the read defect list, the read defect list comprising at least one of a defect entry and information on a number of the defect entry,
wherein the defect entry comprises address information of a defective block and a corresponding replacement block, **characterised by** status information indicating whether the defective block has been replaced with the corresponding replacement block.

## Patentansprüche

1. Aufzeichnungsmedium, das einen Benutzerdatenbereich, einen Ersatzbereich und einen Steuerinformationsbereich umfasst, wobei der Steuerinformationsbereich Informationen für Linearersetzungs-Defektverwaltung umfasst, wobei ein defekter Bereich auf dem Aufzeichnungsmedium mit dem Ersatzbereich ersetzt wird, **gekennzeichnet durch** Defektverwaltungsinformationen, die angeben, ob Ersetzung oder Nichtersetzung des defekten Bereichs **durch** Linearersetzung mit den in dem Steuerinformationsbereich gespeicherten Informationen für eine Linearersetzungs-Defektverwaltung erforderlich ist, wobei die Nichtersetzung angebenden Defektverwaltungsinformationen Nichtersetzung des defekten Bereichs auch dann angeben, wenn der defekte Bereich zuvor für Ersetzung **durch** Linearersetzung gekennzeichnet wurde.

2. Aufzeichnungsmedium nach Anspruch 1, wobei die Defektverwaltungsinformationen mit dem gesamten Aufzeichnungsmedium assoziierte Informationen enthalten.

3. Aufzeichnungsmedium nach Anspruch 1, wobei die Defektverwaltungsinformationen mit Teilen des Aufzeichnungsmediums assoziierte Informationen enthalten.

4. Aufzeichnungsmedium nach Anspruch 1, 2 oder 3, wobei das Aufzeichnungsmedium ein Datenträger ist, der durch einen Standard der Digital Versatile Disc (DVD) gekennzeichnet ist.

5. Aufzeichnungsmedium nach Anspruch 1, 2 oder 3, wobei das Aufzeichnungsmedium ein durch einen DVD-RAM-Standard gekennzeichneter DVD-RAM-Datenträger ist.

6. Aufzeichnungsmedium nach Anspruch 1, 2, 3, 4 oder 5, wobei die Defektverwaltungsinformationen in einem reservierten Bereich eines Datenträger-Zertifizierungs-Flag und eines Gruppen-Zertifizierungs-Flag in einer durch die DVD-RAM bereitgestellten Datenträgerdefinitionsstruktur (DDS) aufgezeichnet werden.

7. Aufzeichnungsmedium nach Anspruch 1 bis 6, wobei die Defektverwaltungsinformationen bei der Initialisierung gespeichert werden.

8. Aufzeichnungsmedium nach einem der Ansprüche 1 bis 6, wobei die Defektverwaltungsinformationen kurz vor dem Aufzeichnen der Echtzeitdaten gespeichert werden.

9. Aufzeichnungsmedium nach einem der vorhergehenden Ansprüche, wobei nur die Startsektornummer eines Blocks, bei dem ein Defekt erzeugt wird, während Echtzeitdaten auf dem Aufzeichnungsmedium aufgezeichnet werden, in einer Sekundärdefektliste (SDL), Informationen, die darstellen, dass der defekte Block nicht ersetzt wurde, in einem FRM-Bit eines SDL-Eintrags zur Darstellung von Ersetzung oder Nichtersetzung des defekten Blocks aufgezeichnet werden und Informationen, die Nichtersetzung darstellen, in der Startsektornummer eines Ersetzungsblocks des SDL-Eintrags aufgezeichnet werden.

10. Aufzeichnungsmedium nach Anspruch 9, wobei die Informationen, die darstellen, dass Linearersetzung gestrichen wurde, ferner in einem reservierten Bit des SDL-Eintrags gespeichert werden, Informationen, die darstellen, dass der defekte Block ersetzt wurde, in dem FRM-Bit des SDL-Eintrags gespeichert werden und die Startsektornummer des defekten Blocks und die des Ersetzungsblocks in dem SDL-Eintrag gespeichert werden.

11. Aufzeichnungsmedium nach einem der vorhergehenden Ansprüche, wobei die Defektverwaltungsinformationen Folgendes umfassen: Informationen, die darstellen, dass Linearersetzung mit Bezug auf alle Daten auf einem Aufzeichnungsmedium angewandt wird, Informationen, die darstellen, dass Linearersetzung selektiv gemäß dem Typ der Daten angewandt wird, und Informationen, die darstellen, dass Linearersetzung nicht auf alle Daten auf dem Aufzeichnungsmedium angewandt wird, und diese Informationen in dem reservierten Bereich der DDS gespeichert werden.

12. Aufzeichnungsmedium nach einem der vorhergehenden Ansprüche, wobei, wenn Echtzeitdaten aufgezeichnet werden, kein Ersatzbereich für Linearersetzung zugeteilt wird und nur ein Ersatzbereich für Slipping-Ersetzung zugeteilt wird.

13. Aufzeichnungsmedium nach Anspruch 12, wobei der Ersatzbereich für Slipping-Ersetzung in der letzten Gruppe des Aufzeichnungsmediums nach der Größe von zur Verarbeitung einer maximalen Anzahl von zur Registrierung einer Primärdefektliste (PDL) fähigen Einträgen fähigen Sektoren zugeteilt wird.

14. Aufzeichnungsmedium nach Anspruch 13, wobei die Verwendung eines Defektverwaltungsverfahrens nur für Echtzeitaufzeichnung, wobei Linearersetzung nicht verwendet wird, indem nur der Ersatzbereich für Slipping-Ersetzung zugeteilt wird, kennzeichnende Defektverwaltungsinformationen in einem reservierten Bereich der DDS und der PDL gespeichert werden.

15. Aufzeichnungsmedium nach einem der Ansprüche 1 bis 10, mit einem Informationsbereich zum Speichern von Defektverwaltungs-Betriebsarteninformationen zum Zeigen mehrerer Defektverwaltungs-Betriebsarten, die Ersetzung oder Nichtersetzung des defekten Bereichs durch Linearersetzung gemäß dem Typ der auf einem Benutzerdatenbereich des Aufzeichnungsmediums aufzuzeichnenden Daten darstellen.

16. Aufzeichnungsmedium nach Anspruch 15, wobei die Defektverwaltungs-Betriebsarteninformationen in einem reservierten Bereich der DDS eines Defektverwaltungsbereichs (DMA) gespeichert werden.

17. Aufzeichnungsmedium nach Anspruch 15 oder 16, wobei die Defektverwaltungs-Betriebsarteninformationen Folgendes umfassen: erste Defektverwaltungs-Betriebsarteninformationen, die darstellen, dass Slipping-Ersetzung und Linearersetzung auf alle Daten auf dem Aufzeichnungsmedium angewandt werden, zweite Defektverwaltungs-Betriebsarteninformationen, die darstellen, dass Linearersetzung selektiv gemäß dem Typ von Daten angewandt wird, und dritte Defektverwaltungs-Betriebsarteninformationen, die darstellen, dass Linearersetzung nicht auf alle Daten auf dem Aufzeichnungsmedium angewandt wird.

18. Aufzeichnungsmedium nach einem der vorhergehenden Ansprüche, mit Defektverwaltungsinformationen, die Nichtersetzung des defekten Bereichs durch Linearersetzung auf alle Daten auf dem Aufzeichnungsmedium in einem Defektverwaltungsbereich darstellen, wobei nur ein Ersatzbereich für Slipping-Ersetzung zugeteilt wird.

19. Aufzeichnungsmedium nach Anspruch 18, wobei der Defektverwaltungsbereich ein reservierter Bereich in der DDS und der PDL ist und der Ersatzbereich für Slipping-Ersetzung eine maximale Anzahl von zur Registrierung der PDL fähigen Einträgen verarbeiten kann.

20. Verfahren zum Aufzeichnen von Echtzeitdaten, während ein Defekt auf einem Datenträger unter Verwendung einer Datenträgeraufzeichnungs- und/oder -wiedergabevorrichtung verwaltet werden, wobei das Verfahren die folgenden Schritte umfasst:
(a) Bestimmen (S101), ob Defektverwaltungs-Betriebsarteninformationen darstellen, ob Ersetzung oder Nichtersetzung eines Defekts durch Linearersetzung erforderlich ist;
(b) Bestimmen (S103), ob aufzuzeichnende Daten Echtzeitdaten sind, wenn die Defektverwaltungs-Betriebsarteninformationen Informationen sind, die darstellen, dass Nichtersetzung durch Linearersetzung erforderlich ist;
(c) Bestimmen (S104), ob ein linear ersetzter Defekt in einem Bereich zum Aufzeichnen von Daten darin besteht, wenn die aufzuzeichnenden Daten Echtzeitdaten sind, und Nichtersetzen des Defekts durch Linearersetzung, wenn die Defektverwaltungs-Betriebsarteninformationen Informationen sind, die darstellen, dass Nichtersetzung durch Linearersetzung auch dann erforderlich ist, wenn der defekte Bereich zuvor für Ersetzung durch Linearersetzung gekennzeichnet wurde; und
(d) Bestimmen (S106), ob ein neuer Defekt in dem Bereich zum Aufzeichnen von Daten darin detektiert wird, wenn kein linear ersetzter Defekt in dem Bereich zum Aufzeichnen von Daten darin besteht, und Aufzeichnen der Echtzeitdaten in einem gewünschten Bereich (S108), wenn der neue Defekt nicht detektiert wird.

21. Verfahren zum Aufzeichnen von Echtzeitdaten nach Anspruch 20, ferner mit den folgenden Schritten:
(e) Durchführen von Defektverwaltung (S102), wenn im Schritt (a) die Defektverwaltungs-Betriebsarteninformationen Informationen sind, die darstellen, dass Ersetzung durch Linearersetzung erforderlich ist; und
(f) Durchführen von Defektverwaltung (S102), wenn im Schritt (b) aufzuzeichnende Daten nicht Echtzeitdaten sind.

22. Verfahren zum Aufzeichnen von Echtzeitdaten nach Anspruch 20 oder 21, ferner mit dem folgenden Schritt:
(g) Streichen der Ersetzung durch Linearersetzung (S105), wenn im Schritt (c) ein linear ersetzter Defekt in einem Bereich zum Aufzeichnen von Daten darin besteht.

23. Verfahren nach Anspruch 22, wobei im Schritt (g) nur die Startsektornummer eines defekten Blocks in der SDL gelassen werden, Informationen, die darstellen, dass der defekte Block nicht ersetzt wurde, in einem FRM-Bit des SDL-Eintrags, der zeigt, ob der defekte Block ersetzt wurde, gespeichert werden und Informationen, die darstellen, dass der defekte Block nicht ersetzt wurde, in der Startsektornummer eines Ersetzungsblocks in dem SDL-Eintrag aufgezeichnet werden.

24. Verfahren nach Anspruch 22, wobei im Schritt (g) ein Flag, das darstellt, dass Ersetzung durch Linearersetzung gestrichen wurde, unter Verwendung eines reservierten Bit des SDL-Eintrags gesetzt wird, Informationen, die darstellen, dass ein defekter Block ersetzt wurde, in einem FRM-Bit des SDL-Eintrags gespeichert werden und die Startsektornummer des defekten Blocks und die Startsektornummer eines Ersetzungsblocks in dem SDL-Eintrag aufgezeichnet werden.

25. Verfahren zum Aufzeichnen von Echtzeitdaten nach einem der Ansprüche 20 bis 24, ferner mit dem folgenden Schritt:
(h) Aufzeichnen von Informationen (S107), die darstellen, dass keine Linearersetzung durchgeführt wurde, wenn im Schritt (d) ein neuer Defekt detektiert wird.

26. Verfahren nach Anspruch 25, wobei im Schritt (h) nur die Startsektornummer eines defekten Blocks in der SDL gelassen wird, Informationen, die darstellen, dass der defekte Block nicht ersetzt wurde, in einem FRM-Bit des SDL-Eintrags, der zeigt, ob der defekte Block ersetzt wurde, gespeichert werden und Informationen, die darstellen, dass der defekte Block nicht ersetzt wurde, in der Startsektornummer eines Ersetzungsblocks in dem SDL-Eintrag aufgezeichnet werden.

27. Verfahren nach einem der Ansprüche 20 bis 26, wobei die Defektverwaltungs-Betriebsarteninformationen Informationen sind, die Ersetzung oder Nichtersetzung durch Linearersetzung für den gesamten Datenträger darstellen, und in einem reservierten Bereich eines Datenträger-Zertifikations-Flag in einer durch DVD-RAM bereitgestellten DDS gespeichert werden.

28. Verfahren nach einem der Ansprüche 20 bis 26, wobei die Defektverwaltungs-Betriebsarteninformationen Informationen sind, die Ersetzung oder Nichtersetzung durch Linearersetzung für bestimmte Datengruppen des Datenträgers darstellen, und in einem reservierten Bereich eines Gruppen-Zertifikations-Flag in einer durch DVD-RAM bereitgestellten DDS gespeichert werden.

29. Verfahren nach einem der Ansprüche 20 bis 26, wobei die Defektverwaltungs-Betriebsarteninformationen Folgendes umfassen: Informationen die dastellen, dass Slipping-Ersetzung und Linearersetzung auf alle Daten auf einem Datenträger angewandt werden, Informationen, die darstellen, dass Linearersetzung selektiv gemäß dem Typ von Daten angewandt wird, und Informationen, die darstellen, dass Linearersetzung nicht auf alle Daten auf dem Datenträger angewandt wird, und diese Informationen in einem reservierten Bereich einer durch DVD-RAM bereitgestellten DDS gespeichert werden.

30. Verfahren nach einem der Ansprüche 20 bis 29, wobei die Defektverwaltungs-Betriebsarteninformationen Informationen sind, die die Verwendung eines Defektverwaltungsverfahrens nur für Echtzeitaufzeichnung, wobei Linearersetzung nicht verwendet wird, indem nur der Ersatzbereich für Slipping-Ersetzung zugeteilt wird, darstellen und in einem reservierten Bereich einer durch DVD-RAM bereitgestellten DDS und der PDL gespeichert werden.

31. Verfahren zum Wiedergeben von Daten aus einem Aufzeichnungsmedium, mit den folgenden Schritten:
Lesen einer Defektliste aus dem Aufzeichnungsmedium, wobei das Aufzeichnungsmedium einen Benutzerdatenbereich und einen Ersatzbereich umfasst; und
Wiedergeben von in dem Benutzerdatenbereich gespeicherten Benutzerdaten unter Verwendung der Lesedefektliste, wobei die Lesedefektliste einen Defekteintrag und/oder Informationen über eine Nummer des Defekteintrags umfasst,
wobei der Defekteintrag Adresseninformationen eines defekten Blocks und eines entsprechenden Ersetzungsblocks umfasst, **gekennzeichnet durch** Statusinformationen, die angeben, ob der defekte Block mit dem entsprechenden Ersetzungsblock ersetzt wurde.

## Revendications

1. Support d'enregistrement comprenant une zone de données d'utilisateur, une zone de réserve et une zone d'informations de commande, dans lequel la zone d'informations de commande comprend des informations destinées à la gestion de défauts de remplacement linéaire conformément à laquelle une zone défectueuse présente sur le support d'enregistrement est remplacée par la zone de réserve, **caractérisé par** des informations de gestion de défauts indiquant si un remplacement ou un non-remplacement par remplacement linéaire de la zone défectueuse par des informations destinées à la gestion de défauts de remplacement linéaire stockées dans la zone d'informations de commande est exigé, dans lequel les informations de gestion de défauts indiquant un non-remplacement indiquent un non-remplacement de la zone défectueuse même si la zone défectueuse a précédemment été désignée pour un remplacement par remplacement linéaire.

2. Support d'enregistrement selon la revendication 1, dans lequel les informations de gestion de défauts contiennent des informations associées à la totalité du support d'enregistrement.

3. Support d'enregistrement selon la revendication 1, dans lequel les informations de gestion de défauts contiennent des informations associées à des parties du support d'enregistrement.

4. Support d'enregistrement selon la revendication 1, 2 ou 3, dans lequel le support d'enregistrement est un disque désigné par une norme de disque numérique universel (DVD).

5. Support d'enregistrement selon la revendication 1, 2 ou 3, dans lequel le support d'enregistrement est un disque DVD-RAM désigné par une norme DVD-RAM.

6. Support d'enregistrement selon la revendication 1, 2, 3, 4 ou 5, dans lequel les informations de gestion de défauts sont enregistrées dans une zone réservée d'un drapeau de certification de disque et d'un drapeau de certification de groupe dans une structure de définition de disque (DDS) fournie par le DVD-RAM.

7. Support d'enregistrement selon l'une quelconque des revendications 1 à 6, dans lequel les informations de gestion de défauts sont stockées lors de l'initialisation.

8. Support d'enregistrement selon l'une quelconque des revendications 1 à 6, dans lequel les informations de gestion de défauts sont stockées immédiatement avant d'enregistrer les données en temps réel.

9. Support d'enregistrement selon l'une quelconque des revendications précédentes, dans lequel seul le numéro du secteur de départ d'un bloc ayant un défaut généré pendant que des données sont enregistrées en temps réel sur le support d'enregistrement est enregistré dans une liste de défauts secondaires (SDL), dans lequel des informations indiquant que le bloc défectueux n'a pas été remplacé sont enregistrées dans un bit FRM d'une entrée SDL pour indiquer un remplacement ou un non-remplacement du bloc défectueux, et dans lequel des informations indiquant un non-remplacement sont enregistrées dans le numéro du secteur de départ d'un bloc de remplacement de l'entrée SDL.

10. Support d'enregistrement selon la revendication 9, dans lequel des informations indiquant qu'un remplacement linéaire a été annulé sont en outre stockées dans un bit réservé de l'entrée SDL, dans lequel des informations indiquant que le bloc défectueux a été remplacé sont stockées dans le bit FRM de l'entrée SDL, et dans lequel le numéro du secteur de départ du bloc défectueux et celui du bloc de remplacement sont stockés dans l'entrée SDL.

11. Support d'enregistrement selon l'une quelconque des revendications précédentes, dans lequel les informations de gestion de défauts comprennent des informations indiquant qu'un remplacement linéaire est appliqué pour chaque donnée d'un support d'enregistrement, des informations indiquant qu'un remplacement linéaire est appliqué sélectivement en fonction du type de donnée, et des informations indiquant qu'un remplacement linéaire n'est pas appliqué à chaque donnée présente sur le support d'enregistrement, et dans lequel ces informations sont stockées dans la zone réservée de la structure DDS.

12. Support d'enregistrement selon l'une quelconque des revendications précédentes, dans lequel des données sont enregistrées en temps réel, dans lequel une zone de réserve destinée au remplacement linéaire n'est pas allouée, et dans lequel seule une zone de réserve destinée à un remplacement par glissement est allouée.

13. Support d'enregistrement selon la revendication 12, dans lequel la zone de réserve destinée à un remplacement par glissement est allouée dans le dernier groupe du support d'enregistrement selon la taille de secteurs capables de traiter un nombre maximum d'entrées permettant d'enregistrer une liste de défauts primaires (PDL).

14. Support d'enregistrement selon la revendication 13, dans lequel les informations de gestion de défauts désignant l'utilisation d'un procédé de gestion de défauts uniquement destiné à un enregistrement en temps réel, selon lequel un remplacement linéaire n'est pas utilisé en n'allouant que la zone de réserve destinée au remplacement par glissement, sont stockées dans une zone réservée de la structure DDS et de la liste PDL.

15. Support d'enregistrement selon l'une quelconque des revendications 1 à 10, comprenant une zone d'informations destinée à stocker des informations de mode de gestion de défauts pour faire apparaître une pluralité de modes de gestion de défauts indiquant un remplacement ou un non-remplacement par remplacement linéaire de la zone défectueuse selon le type de données devant être enregistrées sur une zone de données d'utilisateur du support d'enregistrement.

16. Support d'enregistrement selon la revendication 15, dans lequel les informations de mode de gestion de défauts sont stockées dans une zone réservée de la structure DDS d'une zone de gestion de défauts (DMA).

17. Support d'enregistrement selon la revendication 15 ou 16, dans lequel les informations de mode de gestion de défauts comprennent des premières informations de mode de gestion de défauts indiquant qu'un remplacement par glissement et qu'un remplacement linéaire sont appliqués à chaque donnée présente sur le support d'enregistrement, des secondes informations de mode de gestion de défauts indiquant qu'un remplacement linéaire est sélectivement appliqué selon le type de données, et des troisièmes informations de mode de gestion de défauts indiquant qu'un remplacement linéaire n'est pas appliqué à chaque donnée présente sur le support d'enregistrement.

18. Support d'enregistrement selon l'une quelconque des revendications précédentes, comprenant des informations de gestion de défauts indiquant un non-remplacement par remplacement linéaire de la zone défectueuse de toutes les données présentes sur le support d'enregistrement dans une zone de gestion de défauts, dans lequel seule une zone de réserve destinée à un remplacement par glissement est allouée.

19. Support d'enregistrement selon la revendication 18, dans lequel la zone de gestion de défauts est une zone réservée dans la structure DDS et la liste PDL, et dans lequel la zone de réserve destinée à un remplacement par glissement peut traiter un nombre maximum d'entrées permettant d'enregistrer la liste PDL.

20. Procédé d'enregistrement de données en temps réel tout en gérant un défaut sur un disque en utilisant un appareil d'enregistrement et/ou de reproduction de disque, le procédé comprenant les étapes consistant à :
(a) déterminer (S101) si des informations de mode de gestion de défauts indiquant si un remplacement ou un non-remplacement par remplacement linéaire d'un défaut sont exigées ;
(b) déterminer (S103) si des données devant être enregistrées sont des données en temps réel lorsque les informations de mode de gestion de défauts sont des informations indiquant qu'un non-remplacement par remplacement linéaire est exigé ;
(c) déterminer (S104) si un défaut remplacé linéairement existe dans une zone dans laquelle des données doivent être enregistrées lorsque les données devant être enregistrées sont des données en temps réel, et ne pas remplacer le défaut par remplacement linéaire lorsque les informations de mode de gestion de défauts sont des informations indiquant qu'un non-remplacement par remplacement linéaire est exigé même si la zone défectueuse a été précédemment désignée pour un remplacement par remplacement linéaire ; et
(d) déterminer (S106) si un nouveau défaut est détecté dans la zone dans laquelle des données doivent être enregistrées lorsqu'il n'existe aucun défaut remplacé linéairement dans la zone dans laquelle des données doivent être enregistrées, et enregistrer des données en temps réel dans une zone souhaitée (S108) lorsque le nouveau défaut n'est pas détecté.

21. Procédé d'enregistrement de données en temps réel selon la revendication 20, comprenant en outre les étapes consistant à :
(e) effectuer une gestion de défauts (S102) lorsque les informations de mode de gestion de défauts sont des informations indiquant qu'un remplacement par remplacement linéaire est exigé, lors de l'étape (a) ; et
(f) effectuer une gestion de défauts (S102) lorsque les données devant être enregistrées ne sont pas des données en temps réel lors de l'étape (b).

22. Procédé d'enregistrement de données en temps réel selon la revendication 20 ou 21, comprenant en outre l'étape consistant à :
(g) annuler un remplacement par remplacement linéaire (S105) lorsqu'il existe un défaut remplacé linéairement dans une zone dans laquelle des données doivent être enregistrées, lors de l'étape (c).

23. Procédé selon la revendication 22, dans lequel, lors de l'étape (g), on ne laisse dans la liste SDL que le numéro du secteur de départ d'un bloc défectueux, dans lequel des informations indiquant que le bloc défectueux n'a pas été remplacé sont stockées dans un bit FRM de l'entrée SDL montrant si le bloc défectueux a été remplacé, et dans lequel des informations indiquant que le bloc défectueux n'a pas été remplacé sont enregistrées dans le numéro du secteur de départ d'un bloc de remplacement dans l'entrée SDL.

24. Procédé selon la revendication 22, dans lequel, lors de l'étape (g), un drapeau indiquant qu'un remplacement par remplacement linéaire a été annulé est positionné en utilisant un bit réservée de l'entrée SDL, dans lequel des informations indiquant qu'un bloc défectueux a été remplacé sont stockées dans un bit FRM de l'entrée SDL, et dans lequel le numéro du secteur de départ du bloc défectueux et le numéro du secteur de départ d'un bloc de remplacement sont enregistrés dans l'entrée SDL.

25. Procédé d'enregistrement de données en temps réel selon l'une quelconque des revendications 20 à 24, comprenant en outre l'étape consistant à :
(h) enregistrer des informations (S107) indiquant qu'aucun remplacement linéaire n'a pas été effectué lorsqu'un nouveau défaut est détecté lors de l'étape (d).

26. Procédé selon la revendication 25, dans lequel, lors de l'étape (h), on ne laisse dans la liste SDL que le numéro du secteur de départ d'un bloc défectueux, dans lequel des informations indiquant que le bloc défectueux n'a pas été remplacé sont stockées dans un bit FRM de l'entrée SDL montrant si le bloc défectueux a été remplacé, et dans lequel des informations indiquant que le bloc défectueux n'a pas été remplacé sont enregistrées dans le numéro du secteur de départ d'un bloc de remplacement dans l'entrée SDL.

27. Procédé selon l'une quelconque des revendications 20 à 26, dans lequel les informations de mode de gestion de défauts sont des informations indiquant un remplacement ou un non-remplacement par remplacement linéaire pour la totalité du disque, et sont stockées dans une zone réservée d'un drapeau de certification de disque dans une structure DDS fournie par le DVD-RAM.

28. Procédé selon l'une quelconque des revendications 20 à 26, dans lequel les informations de mode de gestion de défauts sont des informations indiquant un remplacement ou un non-remplacement par remplacement linéaire pour certains groupes de données du disque, et sont stockées dans une zone réservée d'un drapeau de certification de groupe dans une structure DDS fournie par le DVD-RAM.

29. Procédé selon l'une quelconque des revendications 20 à 26, dans lequel les informations de mode de gestion de défauts comprennent des informations indiquant qu'un remplacement par glissement et qu'un remplacement linéaire sont appliqués à toutes les données présentes sur un disque, des informations indiquant qu'un remplacement linéaire est appliqué sélectivement selon le type de données, et des informations indiquant qu'un remplacement linéaire n'est pas appliqué à toutes les données présentes sur le disque, et dans lequel ces informations sont stockées dans une zone réservée d'une structure DDS fournie par le DVD-RAM.

30. Procédé selon l'une quelconque des revendications 20 à 29, dans lequel les informations de mode de gestion de défauts sont des informations indiquant l'utilisation d'un procédé de gestion de défauts uniquement destinée à un enregistrement en temps réel, selon lequel aucun remplacement linéaire n'est utilisé en n'allouant que la zone de réserve au remplacement par glissement, et sont stockées dans une zone réservée d'une structure DDS fournie par le DVD-RAM et la liste PDL.

31. Procédé de reproduction de données depuis un support d'enregistrement, consistant à :
lire une liste de défauts depuis le support d'enregistrement, le support d'enregistrement comprenant une zone de données d'utilisateur et une zone de réserve ; et
reproduire une donnée d'utilisateur stockée dans la zone de données d'utilisateur en utilisant la liste de défauts lue, la liste de défauts lue comprenant au moins l'une d'une entrée de défaut et d'informations concernant un numéro de l'entrée de défaut,
dans lequel l'entrée de défaut comprend des informations d'adresses d'un bloc défectueux et d'un bloc de remplacement correspondant, **caractérisé par le fait que** des informations d'état indiquent si le bloc défectueux a été remplacé par le bloc de remplacement correspondant.
